# EUROPEAN PATENT SPECIFICATION

(11) **EP 3 208 218 B1**
(45) Date of publication and mention of the grant of the patent: **03.05.2023**
(21) Application number: 16156701.1
(22) Date of filing: 22.02.2016
(51) Int. Cl.: B65G 69/00

(54) **INFLATABLE SEAL FOR DOOR OPENINGS**
AUFBLASBARE DICHTUNG FÜR TÜRÖFFNUNGEN
JOINT GONFLABLE POUR OUVERTURES DE PORTES

(43) Date of publication of application: 23.08.2017
(73) Proprietor: Reuterwall Holding AB, 702 27 Örebro (SE)
(72) Inventor: Reuterwall, Vidar, 703 44 Örebro (SE)
(74) Representative: Bjerkén Hynell KB

(56) References cited:
- EP-A1- 1 953 099
- EP-A1- 2 832 670
- US-A- 3 303 615
- US-A- 4 262 458
- US-A- 4 821 468
- Industridraperier: "VÄDERTÄTNINGAR TILL TÅG", vadertatningar.se, 23 October 2015 (2015-10-23), pages 1-5, XP055816861, Retrieved from the Internet: URL:https://web.archive.org/web/2015102302 1833if_/http://vadertatningar.se/wp-conten t/uploads/2013/11/Industridraperier_vadert atningar-for-tag.pdf [retrieved on 2021-06-22]
- Industridraperier: "Vädertätning till tåg, modell Boxholm / Weather seals for trains, the Boxholm model", Youtube, 2 March 2016 (2016-03-02), page 3 pp., XP054981952, Retrieved from the Internet: URL:https://www.youtube.com/watch?v=I0oYIu TKSOE [retrieved on 2021-06-23]
- Industridraperier: "Tågtätningar - Industridraperier", www.industridraperier.se, 22 September 2015 (2015-09-22), pages 1-2, XP055816862, Retrieved from the Internet: URL:https://web.archive.org/web/2015092200 4549/http://www.industridraperier.se/produ kter/vadertatningar/tagtatningar/ [retrieved on 2021-06-22]

## Description

### TECHNICAL FIELD

The present invention relates to a method for inflating a seal device for door openings in a wall, more particularly the invention is concerned with an inflatable seal for door openings in a service building for vehicles or trains.

### BACKGROUND AND PRIOR ART

Inflatable seal devices for door openings are known from, for example, EP 19 53099 A1 and US 4,821,468. Known inflatable seals generally comprise a hollow, flexible, inflatable, horizontal top section and a pair of hollow inflatable vertical side sections arranged at a loading door opening. These sections may constitute three separate members independently mounted at the opening with their interiors in air flow communication as described in US 3,714,745 or they may constitute a single generally U-shaped member as shown in US 3,303,615.

The seal devices serve to seal the loading area of a service building in which the personnel operate from the external environment so that the personnel are sheltered during poor weather. In addition the seal devices serve to prevent loss of heat from a heated building to a cold environment during winter, or prevent access of hot humid air to a cooled or airconditioned building during summer.

Seal devices of the general type comprising separate members, such as shown in US 3,714,745, have the advantage that the members can be spaced apart, at the time of installation, at the door opening, so that they do not interfere or intrude into the entry passage in front of the door opening, and additionally they can be more readily adapted to different door size openings.

In addition a brochure from Industridraperier entitled "VÄDERTÄTNINGAR TILL TÅG" has been published on (or before) 23-10-2015. Said brochure is accessible at https://web.archive.org/web/20151023021833if_/http:// vadertatningar.se/wp-content/uploads/2013/11/Industridraperier_vadertatningar-for-tag.pdf. In particular this document discloses a method of inflating a door seal as well as an inflatable door seal according to the preamble of claim 1, respectively the preamble of claim 6.

An object of the present invention is to provide a door or dock seal device overcoming the afore mentioned disadvantages. Thus, according to the present invention, a method of inflating an inflatable door seal for positioning in an door opening of a wall and for sealing a vehicle is defined in appended claim 1, wherein the door seal comprises inflatable members at its right and a left sides, wherein each of the inflatable members comprises a vertical inflatable portion and an isolating part arranged at its uppermost end; a curtain portion and a bottom seal portion, wherein the inflatable members are inflated so that the vertical inflatable portion and the bottom seal portions are expanding, preferably substantially horizontally, towards the side of the vehicle and such that the isolating parts of the inflatable members meet at the vehicle roof, wherein said inflatable members are inflated to such an extent that the curtain portions are expanding downwards, preferably substantially vertically, towards the roof of the vehicle. The present invention also relates to an inflatable door seal for positioning in a door opening of a wall and for sealing a vehicle as per appended claim 6, wherein the door seal comprises inflatable members at its right and left sides, wherein each of said inflatable members comprise at least one vertical inflatable portion for sealing against the sides of the vehicle, a curtain portion for sealing against the roof of the vehicle and a bottom seal portion for sealing between the ground and the vehicle. According to one embodiment, the isolating part comprises one upper recess for preventing contact between the inflatable members and the overhead line and one lower recess for preventing contact between the inflatable members and the electrical contact arm of the vehicle when the inflatable seal is inflated.

According to one embodiment, the isolating part is box-shaped.

According to one embodiment, the two recesses are semicircle shaped.

According to one embodiment, the at least one vertical inflatable portion is arranged with counterweights to facilitate opening of the seal in inflated and closed state.

According to the invention, the bottom seal portion comprises at least five parallel elongated tube-shaped air-communicating inflatable sections extending from the right side of the main vertical portion, preferably obliquely, downwards to the bottom of the door seal. According to one embodiment, the tube-shaped inflatable section has a width in the range of 1-30 cm and a length in the range of 50-200 cm.

Preferably, a seal device for sealing and securing the overhead line of a vehicle e.g. a tramcar, a trace bus, a train or a train set, without interference between the overhead line of the vehicle and the seal device, is provided.

The seal device for sealing and securing the overhead line of the vehicle, such as a train or a train set may go from deflated to inflated state or from inflated state to deflated state within a cycle time of less than one minute.

Further advantages and effects will emerge upon study and consideration of the following, detailed description of the invention with simultaneous reference to the appended drawing figures, in which:
FIG. 1 is a schematic front view of the inflated seal door mounted at a door opening in a wall.
FIG. 2 is a schematic front view of the inflatable portions of the right side of an inflated seal door mounted at a door opening in a wall.
FIG. 3 is a schematic front view of the right side of an inflatable seal door device according to figure 2 . Figure 3 shows air ducts and details of the retraction system for the main vertical and top portions.
FIG. 4 is a schematic view of the right side of an inflatable seal door device according to figure 2 , showing air ducts and details of the retraction system for the curtain portion.

### DETAILED DESCRIPTION OF EMBODIMENTS

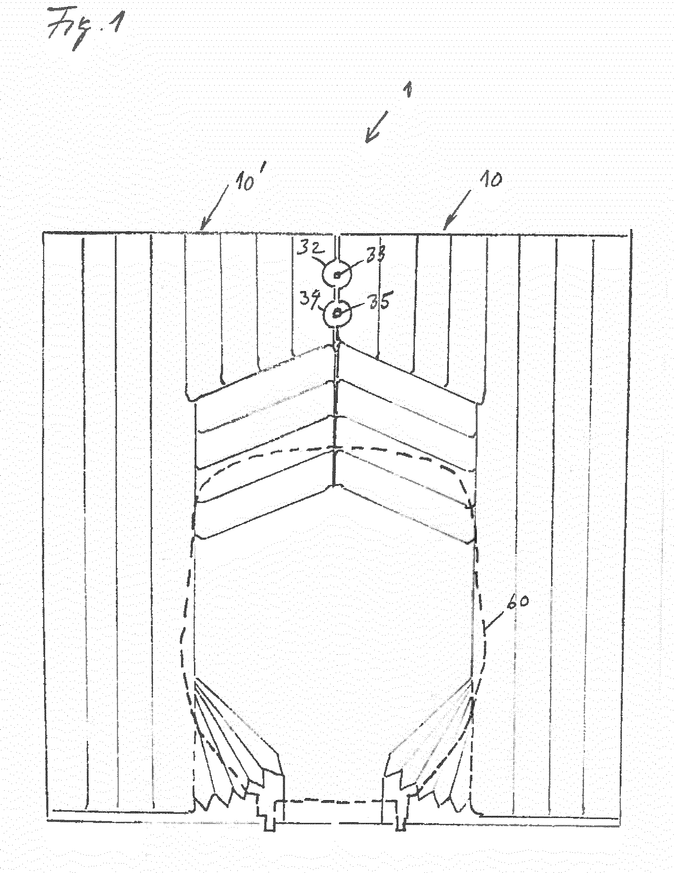

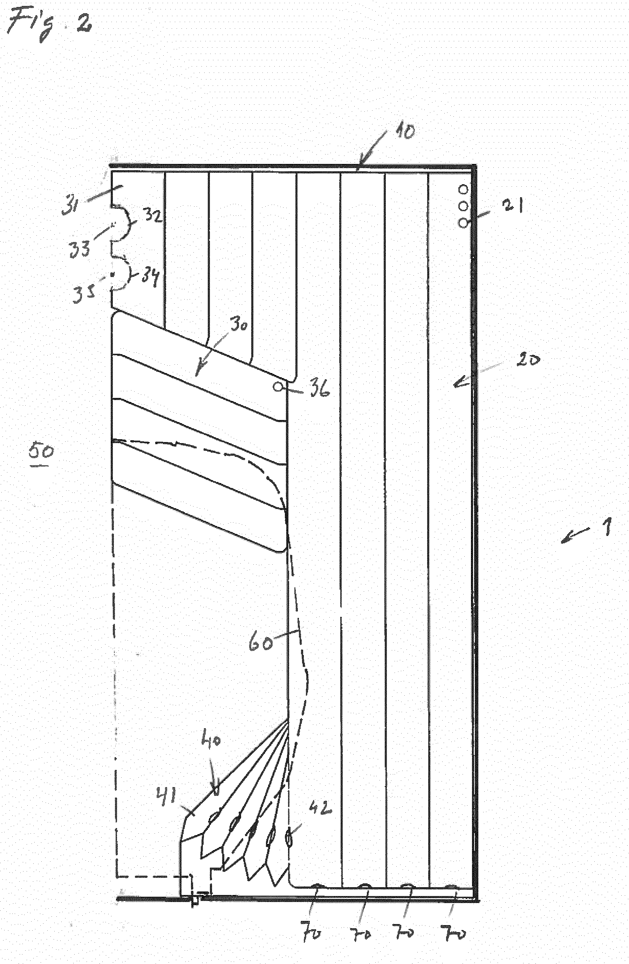

Seal device 1 in figure 1 comprises a pair of generally vertical inflatable side members 10, 10', a right side member 10 and a left side 10' member. It can be seen from figure 2 that the right side member 10 is in opposed facing relationship adjacent the right side edge and the top edge of the door opening 50. In the same manner, left side member 10', figure 1 , which is identical but reversed to the right side member 10, is opposed facing relationship adjacent the left side edge and the top edge of the door opening 50.

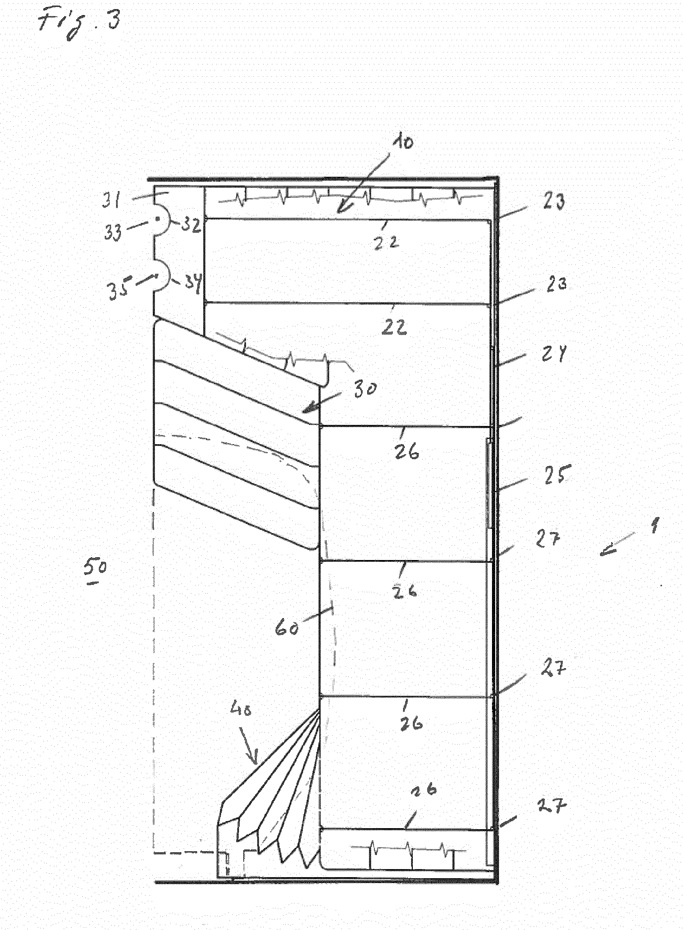

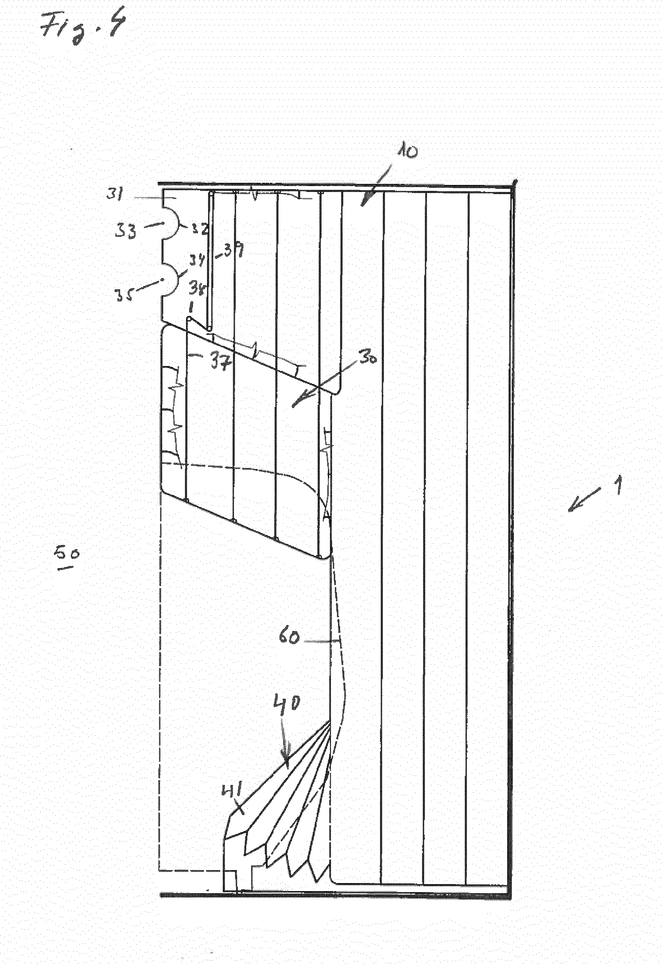

Each of these two side members 10, 10', comprise a vertical main portion 20, a horizontal top portion 30, also named curtain portion, and an inclined bottom seal portion 40, also named foot portion. The seal device 1, figures 3 and 4, further comprise a retraction system, comprising two set-ups of retraction parts, one for each side member 10, 10'. The retraction system may provide a constant retraction force on the side members 10, 10'.

The side members 10, 10' have their major axis of inflation extending laterally to the side members 10, 10'. The phantom axis of inflation is perpendicular to a phantom axis of the door opening 50.

The inflatable portions 20, 30 and 40 may be formed of flexible fabric or material are impervious to air, tear-resistant and capable of repeated engagement with vehicles without damage. Suitable materials include vinyl coated nylon, for example, neoprene coated nylon.

In operation, an air fan may provide a constant flow of air under pressure maintaining the inflatable portions 20, 30, 40 inflated but yieldable. According to one embodiment, the inflatable system is not airtight, since air escapes continuously from a vent, so that the inflatable portions 20, 30, 40 are yieldable and are readily deformed in response to movement of a vehicle 60, for example a train 60, to form a pliant, cushioning seal around the train 60.

Preferably, when the inflated portions 20, 30, 40 are to be collapsed, a first air fan is switched off and the air escapes through ducts and vent under the elastic retracting force of retractors, counterweight force of retractors and of torsion spring.

Preferably, the vertical main portions 20 of the side members 10 inflate laterally of the door opening 50 directly towards each other and thus in a direction generally perpendicular to phantom axis of the entry of the door opening 50.

Thus the seal device 1 of the invention can readily be adapted to door openings 50 of various widths.

According to one embodiment, the bottom seal portion 40 which bridges the space between the vertical members 10, 10' and the underside of the train 60 provides an inflated bottom seal improving the overall efficiency of the seal device 1.

In conventional sealing devices there is no inflated bottom seal, and the space is either open permitting entry or exit of warm air, or hanging flaps of sheet material are employed to bridge the gap under the train. In practice, the personnel tend to ignore the use of the flaps even when provided, in view of the inconvenience of the necessary installation, so that undesired heat loss or heat entry occurs, thereby reducing the efficiency of the system.

The following description, figures 2-4, of the inflatable seal device 1 concerns inflatable portions and retraction parts for the right side member 10 only, as the right side and left side members are identical but reversed. The top portion 30, also named curtain portion, comprises an insulating part 31, preferably box-shaped, adapted for preventing direct contact between the overhead line 33 of the train 60 and the inflatable portions 20, 30, 40 of the right side member 10.

According to one embodiment, the box-shaped insulating part 31 comprise two recesses, preferably semicircle shaped, one upper recess 32 for the overhead line 33 and one lower recess 34 for the electrical power contact arm 35 of the train 60.

The radius of the two semi-circle shaped recesses 32, 34 are selected to provide an air-gap and a safety distance, between the insulating part 31 and the airline contact lead and the electrical contact arm of the train. The safety distance is, preferably at least 160 mm.

The box-shaped insulating part 31 is further, made of a transparent plastic material, preferably a polycarbonate material of Lexan type.

Preferably a first motor or compressor driven air fan, not shown, adapted to provide air under pressure, is mounted within an apparatus housing inside of the service building, for flow of air under pressure through a number of air filling ducts, communicating with the interior of the inflatable portions of the right side member 10 of the door seal 1. Preferably a second air fan, not shown, is mounted in the same apparatus housing, for flow of air under pressure for venting or emptying inflatable portions of the right side door seal via at least one venting duct of the door seal 1, not shown.

Preferably, the main vertical portion 20 is filled with air, preferably via three main filling ducts 21, arranged on the upper right part of the main vertical portion 20, whereby the main filling ducts 21 are connected to the first air compressor via connecting hoses, not shown.

Preferably, the curtain portion 30 is filled with air, via a curtain filling duct 36 arranged on the upper right part of the curtain portion 30, connected to the first air compressor via a connecting hose, not shown.

Preferably, the bottom seal portion 40 is filled with air, via at least one internal duct 42 or valve, arranged between the bottom seal portion and the main vertical portion 20, in the lower left part of the bottom seal portion 40.

According to the invention, the bottom seal portion 40 is triangular or sun-fan shaped, comprising at least five parallel elongated tube-shaped air communicating sections 41 extending from the left side of the main vertical portion, preferably obliquely, downwards to the bottom of the seal device 1. The five sections 41 are air communicating with each other via internal ducts 42, shaped such that the bottom seal portion 40 is inflated gradually from right to left. Each tube-shaped inflatable section 41 has a width in the range of 0-30 cm and a length in the range of 50 -100 cm.

Preferably, the second air fan is provided for emptying or venting the right-side inflatable member 10 via the at least one venting duct of the seal device 1.

Preferably, the two air fans are connected and disconnected via a central control unit and via control valves, weather the two inflatable members 10, 10' should be inflated or vented. Preferably, the retraction system, figure 3 and 4, includes counter-weights, rubber lines, cords and pulleys for retraction of the inflatable members 10, 10'. The retraction system comprise a first retracting part, figure 3, for retracting the curtain portion 30 and a second retracting part, figure 4, for retracting the vertical main portion 20 and the bottom seal portion 40.

According to one embodiment, the first retraction part of the curtain portion 30, figure 3 comprises four vertical elastic rubber lines 37 equally distanced along the curtain portion 30.

At one end, the rubber lines 37 are firmly attached to the lower part of the inflatable curtain portion 30. Preferably, at the other end, the rubber lines 37 are attached and secured to the upper part of the main inflatable portion 20 via a pulley 38 and via a guide loop 39.

Preferably, the second retraction part for the main vertical inflatable portion 20 and the bottom seal portion 40, figure 4, comprises two horizontal upper cords 22 extended along the upper part of the main inflatable portion 20, firmly attached, at one end, to the insulating part 31 of the upper left part of the main portion 20, and at the other end, to the upper right side of the main portion 20, via two upper pulleys 23, a first block 24 and a first counterweight 25. Preferably, the lower part of the main inflatable portion 20 comprises four horizontal lower cords 26 firmly attached, at one end, to the left lower side of the main inflatable portion 20 and, at the opposite end, secured to the leg wall via a second counterweight, not shown and via four lower pulleys 27.

Preferably, in order to improve resistance for high forces acting on the fabrics during inflation and retraction of the inflatable portions, the upper and the lower parts of the main inflatable portion 20, are reinforced with metal plates or bars fixed and fastened to the inside of the fabrics, not shown, to which the cords 22 26 are attached.

Preferably, in order to prevent accumulation of condensed water inside the inflatable members (10, 10'), drain openings 70 are arranged in the bottom parts of the inflatable members (10, 10').

During periods when no loading or unloading is taking place through door opening, the door opening is closed by a conventional door, not shown. In this condition the seal device 1 is in a non-inflated, retracted condition.

Preferably, when a train 60 is positioned in the door opening, the side members 10 and 10' are inflated by continuous flow of air from the first air fan through the air ducts to the interior of the inflatable portions of the side members 10, 10'. Preferably, a constant flow of air into the interior of the seal device 1 in this way, under slight pressure, is sufficient to overcome the retracting forces of the retracting system.

In a similar manner the air pressure in inflating members 10 during inflation overcomes the elastic retracting force of the first retraction part as well as the weight retracting force of the second part retracting part.

The air vent permits fast exit of air under pressure from the system whereby a constant flow of air under pressure is introduced by the second air fan.

## Claims

1. A method of inflating an inflatable door seal (1) positioned in a door opening (50) of a wall and for sealing a vehicle (60), wherein the door seal (1) comprises inflatable side members (10, 10') at its right and left sides, wherein each of the inflatable side members (10, 10') comprises a vertical inflatable main portion (20) comprising an isolating part (31) arranged at its uppermost end; and a bottom seal portion (40), wherein the inflatable side members (10, 10') are inflated so that each bottom seal portion (40) is expanding towards the side of the vehicle (60), wherein each vertical inflatable main portion (20) is expanding towards the side of the vehicle (60) such that the isolating parts (31) of the inflatable side members (10, 10') meet at the vehicle (60) roof, wherein each of the inflatable side members (10, 10') comprises a curtain portion (30), wherein said inflatable side members (10, 10') are inflated to such an extent that each curtain portion (30) is expanding downwards towards the roof of the vehicle (60), wherein each bottom seal portion (40) is triangular or sun-fan shaped, comprising at least five parallel elongated tube-shaped air communicating sections (41) extending from the inner side of each main vertical portion (20), preferably obliquely, downwards to the bottom of the inflatable door seal (1), **characterised in that** said five sections (41) are air communicating with each other via internal ducts (42) and shaped such that said bottom seal portion (40) is inflated gradually inwardly, and wherein each tube-shaped inflatable section (41) has a width in the range of 0-30 cm and a length in the range of 50 -100 cm.

2. A method according to claim 1, **characterised in that** each inflatable side member (10, 10') is provided with air under pressure by means of a number of air filling ducts communicating with the interior of the inflatable portions of the inflatable side members (10, 10'), from a first motor or compressor driven air fan mounted within an apparatus housing inside of a service building including said door opening (50).

3. A method according to claim 2, **characterised in that** said main vertical portion (20) is filled with air via three main filling ducts (21) arranged on the upper outer part of each main vertical portion (20), wherein the main filling ducts (21) are connected to said first motor or compressor driven air fan via connecting hoses.

4. A method according to claim 3, **characterised in that** each curtain portion (30) is filled with air via a curtain filling duct (36) arranged on the upper outer part of the curtain portion (30), wherein said curtain filling duct (36) is connected to said first motor or compressor driven air fan via a connecting hose.

5. A method according to claim 1, **characterised in that characterised in that** the opening of the seal from an inflated and closed state is facilitated by at least one vertical inflatable portion (20) being arranged with counterweights (25).

6. An inflatable door seal (1) for positioning in a door opening (50) of a wall and for sealing a vehicle (60), wherein the door seal (1) comprises inflatable side members (10, 10') at its right and left sides, wherein each of said inflatable side members (10, 10') comprises at least one vertical inflatable main portion (20) for sealing against the sides of the vehicle (60), and a bottom seal portion (40) for sealing between the ground and the vehicle (60), wherein each of said inflatable side members (10, 10') comprises a curtain portion(30) for sealing against the roof of the vehicle (60), wherein each bottom portion (40) is triangular or sun fan shaped, comprising at least five parallel elongated tube-shaped air communicating sections (4) extending from the inner side of each main vertical portion (20), preferably obliquely, downwards to the bottom of the inflated door seal (1), **characterised in that** said five sections (4) are air communicating with each other via internal ducts (42) and shaped such that said bottom seal portion (40) is inflated gradually inwardly, and wherein each tube-shaped inflated section (41) has a width in the range of 0-30 cm and a length in the range of 50 -100 cm.

7. The inflatable seal (1) according to claim 6, **characterised in that** each inflatable side member (10, 10') is arranged to be provided with air under pressure by means of a number of air filling ducts communicating with the interior of the inflatable portions of the inflatable side members (10, 10'), from a first motor or compressor driven air fan mounted within an apparatus housing inside of a service building including said door opening (50).

8. The inflatable seal (1) according to claim 7, **characterised in that** said main vertical portion (20) is arranged to be filled with air via three main filling ducts (21) arranged on the upper outer part of each main vertical portion (20), wherein the main filling ducts (21) are connected to said first motor or compressor driven air fan via connecting hoses.

9. The inflatable seal (1) according to claim 8, **characterised in that** each curtain portion (30) is arranged to be filled with air via a curtain filling duct (36) arranged on the upper outer part of the curtain portion (30), wherein said curtain filling duct (36) is connected to said first motor or compressor driven air fan via a connecting hose.

10. The inflatable seal (1) according to claim 6, **characterised in that** it comprises a retraction system, said retraction system further includes counter-weights, rubber lines, cords and pulleys for retraction of the inflatable side members (10, 10') and that said retraction system comprises first retracting part arranged to retract said curtain portion (30) and a second retracting part arranged to retract the vertical main portion (20) and the bottom seal portion (40), wherein preferably said first retraction part of the curtain portion (30) comprises four vertical elastic rubber lines (37) equally distanced along the curtain portion (30), wherein said the rubber lines (37) are firmly attached to the lower part of the inflatable curtain portion (30), and preferably, at the other end, the rubber lines (37) are attached and secured to the upper part of the main inflatable portion (20) via a pulley (38) and via a guide loop (39).

11. The inflatable seal (1) according to claim 10, **characterised in that** said second retraction part for the main vertical inflatable portions (20) and the bottom seal portions (40) comprise two horizontal upper cords (22) extending along the upper part of each main inflatable portions (20), firmly attached, at one end, to an insulating part (31) of the upper left part of each main portion (20), and at the other end, to the upper outer side of each main portion (20), via two upper pulleys (23), a first block (24) and a first counterweight (25), wherein preferably, the lower part of each main inflatable portion (20) comprises four horizontal lower cords (26) firmly attached, at one end, to the inner lower side of each main inflatable portion (20) and, at the opposite end, secured to the leg wall via a second counterweight and via four lower pulleys (27).

12. The inflatable seal (1) according to claim 6, wherein at least one vertical portion (20) is arranged with counterweights (25) to facilitate opening of the seal (1) in inflated and closed state.

## Patentansprüche

1. Verfahren zum Aufblasen einer aufblasbaren Türdichtung (1), positioniert in einer Türöffnung (50) einer Wand und zum Abdichten eines Fahrzeugs (60), wobei die Türdichtung (1) aufblasbare Seitenelemente (10, 10') an ihren rechten und linken Seiten umfasst, wobei jedes der aufblasbaren Seitenelemente (10, 10') einen vertikalen aufblasbaren Hauptabschnitt (20), der ein Isolierteil (31) umfasst, das an seinem obersten Ende angeordnet ist, und einen Bodendichtungsabschnitt (40) umfasst, wobei die aufblasbaren Seitenelemente (10, 10') so aufgeblasen werden, dass sich jeder Bodendichtungsabschnitt (40) in Richtung der Seite des Fahrzeugs (60) ausdehnt, wobei sich jeder vertikale aufblasbare Hauptabschnitt (20) in Richtung der Seite des Fahrzeugs (60) ausdehnt, so dass sich die isolierenden Teile (31) der aufblasbaren Seitenelemente (10, 10') an dem Dach des Fahrzeugs (60) treffen, wobei jedes der aufblasbaren Seitenelemente (10, 10') einen Vorhangabschnitt (30) aufweist, wobei die aufblasbaren Seitenelemente (10, 10') in einem solchen Ausmaß aufgeblasen werden, dass sich jeder Vorhangabschnitt (30) nach unten in Richtung des Dachs des Fahrzeugs (60) ausdehnt, wobei jeder Bodendichtungsabschnitt (40) dreieckig oder sonnenfächerförmig ist, umfassend wenigstens fünf parallele längliche röhrenförmige Luftverbindungsabschnitte (41), die sich von der Innenseite jedes vertikalen Hauptabschnitts (20), bevorzugt schräg, nach unten zu der Unterseite der aufblasbaren Türdichtung (1) erstrecken, **dadurch gekennzeichnet, dass** die fünf Abschnitte (41) über innere Kanäle (42) miteinander in Luftverbindung stehen und so geformt sind, dass der Bodendichtungsabschnitt (40) allmählich nach innen aufgeblasen wird, und wobei j eder röhrenförmige aufblasbare Abschnitt (41) eine Breite in dem Bereich von 0-30 cm und eine Länge in dem Bereich von 50-100 cm aufweist.

2. Verfahren nach Anspruch 1, **dadurch gekennzeichnet, dass** jedes aufblasbare Seitenelement (10, 10') mittels einer Anzahl von Luftfüllleitungen, die mit dem Inneren der aufblasbaren Abschnitte der aufblasbaren Seitenelemente (10, 10') in Verbindung stehen, von einem ersten motor- oder kompressorbetriebenen Luftgebläse, das in einem Vorrichtungsgehäuse innerhalb eines Servicegebäudes einschließlich der Türöffnung (50) montiert ist, mit Druckluft versorgt wird.

3. Verfahren nach Anspruch 2, **dadurch gekennzeichnet, dass** der vertikale Hauptabschnitt (20) über drei Hauptfüllkanäle (21), die an dem oberen äußeren Teil jedes vertikalen Hauptabschnitts (20) angeordnet sind, mit Luft gefüllt wird, wobei die Hauptfüllkanäle (21) über Verbindungsschläuche mit dem ersten motor- oder kompressorbetriebenen Luftgebläse verbunden sind.

4. Verfahren nach Anspruch 3, **dadurch gekennzeichnet, dass** jeder Vorhangabschnitt (30) über einen Vorhangfüllkanal (36), der an dem oberen äußeren Teil des Vorhangabschnitts (30) angeordnet ist, mit Luft befüllt wird, wobei der Vorhangfüllkanal (36) über einen Verbindungsschlauch mit dem ersten motor- oder kompressorgetriebenen Luftgebläse verbunden ist.

5. Verfahren nach Anspruch 1, **dadurch gekennzeichnet, dass** das Öffnen der Dichtung aus einem aufgeblasenen und geschlossenen Zustand dadurch erleichtert wird, dass wenigstens ein vertikaler aufblasbarer Abschnitt (20) mit Gegengewichten (25) angeordnet ist.

6. Aufblasbare Türdichtung (1) zur Positionierung in einer Türöffnung (50) einer Wand und zum Abdichten eines Fahrzeugs (60), wobei die Türdichtung (1) aufblasbare Seitenelemente (10, 10') an ihrer rechten und linken Seite umfasst, wobei jedes der aufblasbaren Seitenelemente (10, 10') wenigstens einen vertikalen aufblasbaren Hauptabschnitt (20) zum Abdichten gegen die Seiten des Fahrzeugs (60) und einen Bodenabdichtungsabschnitt (40) zum Abdichten zwischen dem Boden und dem Fahrzeug (60) umfasst, wobei jedes der aufblasbaren Seitenelemente (10, 10') einen Vorhangabschnitt (30) zum Abdichten gegen das Dach des Fahrzeugs (60) umfasst, wobei jeder Bodenabschnitt (40) dreieckig oder sonnenfächerförmig ist, umfassend wenigstens fünf parallele längliche röhrenförmige Luftverbindungsabschnitte (4), die sich von der Innenseite jedes vertikalen Hauptabschnitts (20), bevorzugt schräg, nach unten zu der Unterseite der aufgeblasenen Türdichtung (1) erstrecken, **dadurch gekennzeichnet, dass** die fünf Abschnitte (4) über innere Kanäle (42) miteinander in Luftverbindung stehen und so geformt sind, dass der Bodendichtungsabschnitt (40) allmählich nach innen aufgeblasen wird, und wobei jeder röhrenförmige aufgeblasene Abschnitt (41) eine Breite in dem Bereich von 0-30 cm und eine Länge in dem Bereich von 50-100 cm aufweist.

7. Aufblasbare Dichtung (1) nach Anspruch 6, **dadurch gekennzeichnet, dass** jedes aufblasbare Seitenelement (10, 10') so angeordnet ist, dass es mittels einer Anzahl von Luftfüllleitungen, die mit dem Inneren der aufblasbaren Abschnitte der aufblasbaren Seitenelemente (10, 10') in Verbindung steht, mit druckbeaufschlagter Luft von einem ersten motor- oder kompressorbetriebenen Luftgebläse versorgt wird, das in einem Vorrichtungsgehäuse innerhalb eines Servicegebäudes montiert ist, einschließlich der Türöffnung (50).

8. Aufblasbare Dichtung (1) nach Anspruch 7, **dadurch gekennzeichnet, dass** der vertikale Hauptabschnitt (20) so angeordnet ist, dass er über drei Hauptfüllkanäle (21), die an dem oberen äußeren Teil jedes vertikalen Hauptabschnitts (20) angeordnet sind, mit Luft gefüllt werden kann, wobei die Hauptfüllkanäle (21) über Verbindungsschläuche mit dem ersten motor- oder kompressorbetriebenen Luftgebläse verbunden sind.

9. Aufblasbare Dichtung (1) nach Anspruch 8, **dadurch gekennzeichnet, dass** jeder Vorhangabschnitt (30) so angeordnet ist, dass er über einen Vorhangfüllkanal (36), der an dem oberen äußeren Teil des Vorhangabschnitts (30) angeordnet ist, mit Luft gefüllt werden kann, wobei der Vorhangfüllkanal (36) über einen Verbindungsschlauch mit dem ersten motor- oder kompressorbetriebenen Luftgebläse verbunden ist.

10. Aufblasbare Dichtung (1) nach Anspruch 6, **dadurch gekennzeichnet dass** sie ein Rückzugssystem umfasst, wobei das Rückzugssystem ferner Gegengewichte, Gummistränge, Zugbänder und Rollen zum Zurückziehen der aufblasbaren Seitenelemente (10, 10') einschließt, und dass das Rückzugssystem ein erstes Rückzugsteil, das so angeordnet ist, dass es den Vorhangabschnitt (30) zurückzieht, und ein zweites Rückzugsteil umfasst, das so angeordnet ist, dass es den vertikalen Hauptabschnitt (20) und den Bodendichtungsabschnitt (40) zurückzieht, wobei bevorzugt das erste Rückzugsteil des Vorhangabschnitts (30) vier vertikale elastische Gummistränge (37) umfasst, die gleichmäßig entlang des Vorhangabschnitts (30) beabstandet sind, wobei die Gummistränge (37) fest an dem unteren Teil des aufblasbaren Vorhangabschnitts (30) befestigt sind, und bevorzugt an dem anderen Ende die Gummistränge (37) an dem oberen Teil des aufblasbaren Hauptabschnitts (20) über eine Rolle (38) und über eine Führungsöse (39) befestigt und gesichert sind.

11. Aufblasbare Dichtung (1) nach Anspruch 10, **dadurch gekennzeichnet, dass** das zweite Rückzugsteil für die vertikalen aufblasbaren Hauptabschnitte (20) und die Bodendichtungsabschnitte (40) zwei horizontale obere Zugbänder (22) umfassen, die sich entlang des oberen Teils jedes aufblasbaren Hauptabschnitts (20) erstrecken, fest an einem Ende an einem isolierenden Teil (31) des oberen linken Teils jedes Hauptabschnitts (20) und an dem anderen Ende über zwei obere Rollen (38), einen ersten Block (24) und ein erstes Gegengewicht (25) an der oberen Außenseite jedes Hauptabschnitts (20) befestigt sind, wobei bevorzugt der untere Teil jedes aufblasbaren Hauptabschnitts (20) vier horizontale untere Zugbänder (26) aufweist, die an einem Ende fest an der inneren Unterseite jedes aufblasbaren Hauptabschnitts (20) und an dem gegenüberliegenden Ende und über ein zweites Gegengewicht und über vier untere Rollen (27) an der Schenkelwand befestigt sind.

12. Aufblasbare Dichtung (1) nach Anspruch 6, wobei wenigstens ein vertikaler Abschnitt (20) mit Gegengewichten (25) bereitgestellt ist, um Öffnen der Dichtung (1) in aufgeblasenem und geschlossenem Zustand zu erleichtern.

## Revendications

1. Un procédé de gonflage d'un joint (1) de porte gonflable positionné dans une ouverture de porte (50) d'une paroi et pour fermer un véhicule (60) de façon étanche, le joint de porte (1) comprenant des éléments latéraux gonflables (10, 10') au niveau de ses côtés droit et gauche, chacun des éléments latéraux gonflables (10, 10') comprenant une partie principale verticale gonflable (20) comprenant une partie isolante (31) agencée à son extrémité la plus haute ; et une partie (40) d'étanchéité inférieure, les éléments latéraux gonflables (10, 10') étant gonflés de sorte que chaque partie (40) d'étanchéité inférieure se dilate vers le côté du véhicule (60), chaque partie principale verticale gonflable (20) se dilatant vers le côté du véhicule (60) de sorte que les parties isolantes (31) des éléments latéraux gonflables (10, 10') se rejoignent au niveau du toit du véhicule (60), chacun des éléments latéraux gonflables (10, 10') comprenant une portion formant rideau (30), lesdits éléments latéraux gonflables (10, 10') étant gonflés à un degré tel que chaque portion formant rideau (30) se dilate vers le bas en direction du toit du véhicule (60), chaque partie (40) d'étanchéité inférieure étant en forme de triangle ou d'éventail, comprenant au moins cinq sections allongées parallèles (41) en forme de tube en communication d'air s'étendant depuis le côté intérieur de chaque partie verticale principale (20), de préférence obliquement, vers le bas jusqu'au bas du joint (1) de porte gonflable,
**caractérisé en ce que**
lesdites cinq sections (41) sont en communication d'air les unes avec les autres via des conduits internes (42) et formées de sorte que ladite partie (40) d'étanchéité inférieure est gonflée progressivement vers l'intérieur, et chaque section gonflable (41) en forme de tube ayant une largeur comprise entre 0 et 30 cm et une longueur comprise entre 50 et100 cm.

2. Un procédé selon la revendication 1, **caractérisé en ce que** chaque élément latéral gonflable (10, 10') est alimenté en air sous pression au moyen d'un certain nombre de conduits de remplissage d'air communiquant avec l'intérieur des parties gonflables des éléments latéraux gonflables. (10, 10'), à partir d'un premier ventilateur d'air entraîné par un moteur ou un compresseur monté à l'intérieur d'un boîtier d'appareil situé à l'intérieur d'un bâtiment de service comprenant ladite ouverture de porte (50).

3. Un procédé selon la revendication 2, **caractérisé en ce que** ladite partie verticale principale (20) est remplie d'air via trois conduits principaux de remplissage (21) disposés sur la partie externe supérieure de chaque partie verticale principale (20), les conduits principaux de remplissage (21) étant relié audit premier ventilateur d'air entraîné par moteur ou compresseur via des tuyaux de raccordement.

4. Un procédé selon la revendication 3, **caractérisé en ce que** chaque portion formant rideau (30) est remplie d'air via un conduit (36) de remplissage de rideau agencé sur la partie extérieure supérieure de la portion formant rideau (30), ledit conduit (36) de remplissage de rideau étant relié audit premier ventilateur d'air entraîné par moteur ou compresseur par l'intermédiaire d'un tuyau de raccordement.

5. Un procédé selon la revendication 1, **caractérisé en ce que** l'ouverture du joint à partir d'un état gonflé et fermé est facilitée par au moins une partie gonflable verticale (20) qui est agencée avec des contrepoids (25).

6. Un joint (1) de porte gonflable destiné à être positionné dans une ouverture de porte (50) d'une paroi et à étanchéifier un véhicule (60), le joint de porte (1) comprenant des éléments latéraux gonflables (10, 10') à ses côtés droit et gauche, chacun desdits éléments latéraux gonflables (10, 10') comprenant au moins une partie principale gonflable verticale (20) pour venir contre les côtés du véhicule (60) avec étanchéité, et une partie (40) d'étanchéité inférieure pour réaliser une étanchéité entre le sol et le véhicule (60), chacun desdits éléments latéraux gonflables (10, 10') comprenant une portion formant rideau (30) pour venir contre le toit du véhicule (60) avec étanchéité, chaque partie inférieure (40) étant de forme triangulaire ou en éventail, comprenant au moins cinq sections allongées parallèles (4) en forme de tube en communication d'air s'étendant depuis le côté intérieur de chaque partie principale verticale (20), de préférence obliquement, vers le bas jusqu'au bas du joint de porte (1) gonflé, **caractérisé en ce que** lesdites cinq sections (4) sont en communication d'air les unes avec les autres via des conduits internes (42) et formées de telle sorte que ladite partie (40) d'étanchéité inférieure est gonflée progressivement vers l'intérieur, et chaque section gonflée en forme de tube (41) ayant une largeur comprise entre 0 et 30 cm et une longueur comprise entre 50 à 100 cm.

7. Le joint gonflable (1) selon la revendication 6, **caractérisé en ce que** chaque élément latéral gonflable (10, 10') est agencé pour être alimenté en air sous pression au moyen d'une pluralité de conduits de remplissage d'air communiquant avec l'intérieur des parties gonflables des éléments latéraux gonflables (10, 10'), à partir d'un premier ventilateur d'air entraîné par un moteur ou un compresseur à l'intérieur d'un boîtier d'appareil situé à l'intérieur d'un bâtiment de service comprenant ladite ouverture de porte (50).

8. Le joint gonflable (1) selon la revendication 7, **caractérisé en ce que** ladite partie verticale principale (20) est agencée de façon à être remplie d'air via trois conduits principaux de remplissage (21) agencés sur la partie externe supérieure de chaque partie verticale principale (20), les conduits principaux de remplissage (21) étant reliés audit premier ventilateur d'air entraîné par moteur ou compresseur par l'intermédiaire de tuyaux de raccordement.

9. Le joint gonflable (1) selon la revendication 8, **caractérisé en ce que** chaque portion formant rideau (30) est agencé pour être rempli d'air via un conduit (36) de remplissage de rideau agencé sur la partie extérieure supérieure de la partie (30) formant rideau, ledit conduit (36) de remplissage de rideau étant relié audit premier ventilateur d'air entraîné par moteur ou compresseur via un tuyau de raccordement.

10. Le joint gonflable (1) selon la revendication 6, **caractérisé en ce qu'**il comprend un système de rétraction, ledit système de rétraction comprend en outre des contrepoids, des lignes de caoutchouc, des cordes et des poulies pour la rétraction des éléments latéraux gonflables (10, 10') et **en ce que** ledit système de rétraction comprend une première partie de rétraction agencée pour rétracter ladite partie (30) formant rideau et une deuxième partie de rétraction agencée pour rétracter la partie principale verticale (20) et la partie (40) d'étanchéité inférieure, ladite première partie de rétraction de la partie (30) formant rideau comprenant de préférence quatre lignes de caoutchouc élastiques verticales (37) équidistantes le long de la portion formant rideau (30), lesdites lignes de caoutchouc (37) étant solidement fixées à la partie inférieure de la partie gonflable (30) formant rideau, et de préférence, à l'autre extrémité, les lignes en caoutchouc (37) sont fixées à la partie supérieure de la partie principale gonflable (20), et solidaires de celle-ci, via une poulie (38) et via une boucle de guidage (39).

11. Le joint gonflable (1) selon la revendication 10, **caractérisé en ce que** ladite deuxième partie de rétraction des parties gonflables verticales principales (20) et des parties (40) d'étanchéité inférieures comprend deux cordons supérieurs horizontaux (22) s'étendant le long de la partie supérieure de chacune des parties principales gonflables (20), solidement fixées, à une extrémité, à une partie isolante (31) de la partie supérieure gauche de chaque partie principale (20), et à l'autre extrémité, au côté extérieur supérieur de chaque partie principale (20), par l'intermédiaire de deux poulies supérieures (23), d'un premier bloc (24) et d'un premier contrepoids (25), la partie inférieure de chaque portion gonflable principale (20) comportant de préférence quatre cordons inférieurs horizontaux (26) reliés solidement, à une extrémité, au côté inférieur intérieur de chaque partie gonflable principale (20) et, à l'extrémité opposée, fixés à la paroi de jambe via un deuxième contrepoids et via quatre poulies inférieures (27).

12. Le joint gonflable (1) selon la revendication 6, dans lequel au moins une partie verticale (20) est agencée avec des contrepoids (25) pour faciliter l'ouverture du joint (1) à l'état gonflé et fermé.
